# EUROPÄISCHE PATENTSCHRIFT

(11) **EP 3 320 238 B1**
(45) Veröffentlichungstag und Bekanntmachung des Hinweises auf die Patenterteilung: **05.02.2020**
(21) Anmeldenummer: 16734652.7
(22) Anmeldetag: 04.07.2016
(51) Int. Cl.: F16J 15/02, F16J 15/10

(54) **RINGDICHTUNG**
RING SEAL
JOINT TORIQUE

(30) Priorität: 07.07.2015 DE 102015110944
(43) Veröffentlichungstag der Anmeldung: 16.05.2018
(73) Patentinhaber: W. L. Gore & Associates GmbH, 85640 Putzbrunn (DE)
(72) Erfinder: NACHTMANN, Anton, 83714 Miesbach (DE)
(74) Vertreter: HGF Limited
(86) Internationale Anmeldenummer: PCT/EP2016/065708
(87) Internationale Veröffentlichungsnummer: WO 2017/005692

(56) Entgegenhaltungen:
- EP-A2- 0 303 102
- GB-A- 2 264 986
- US-A- 3 549 156

## Beschreibung

Die Erfindung betrifft eine Ringdichtung, insbesondere O-Ringdichtung, mit einer einen ringförmigen elastomeren Kern umschließenden Ummantelung.

Es gibt zahlreiche Anwendungen von O-Ringen, in denen der Einsatz herkömmlicher Elastomere nicht möglich ist. Aggressive Chemikalien oder extreme Temperaturen können konventionelle O-Ringe zerstören und zum Ausfall oder zur Leckage führen. Im Falle derartiger Belastungen werden die Elastomer-O-Ringe auch mit Polytetrafluorethylen (PTFE) ummantelt oder vollständig aus PTFE gefertigt, welches chemikalien- und hitzebeständig ist. PTFE-O-Ringe sind jedoch härter als Elastomer-O-Ringe und nicht elastisch. Sie federn dementsprechend nicht zurück und erfordern dadurch höhere Anpressdrücke, dem in gewissem Maße durch geschlitzte Ringausführungen entgegengewirkt werden kann. Alternativ kann auch Perfluorelastomer (FFKM) verwendet werden, welches die positiven Eigenschaften des PTFE mit dem elastischen Verhalten von FluorKautschuk (FKM) kombiniert. Jedoch ist der Preis von Perfluorelastomeren vergleichsweise hoch, so dass vollständig aus Perfluorelastomeren hergestellte O-Ringe nur dann eingesetzt werden, wenn andere Werkstoffe den Anforderungen nicht mehr gewachsen sind und sicherheitstechnische Aspekte die höheren Kosten rechtfertigen. Typische Einsatzgebiete von Perfluorelastomeren sind z. B. die Chemische, Erdöl- und Halbleiterindustrie, Hochvakuum-Technik sowie Luft- und Raumfahrt (Katalog "O-Ringe" von Dichtomatik, Auflage 3.6.3).

Eine andere Alternative für die vergleichsweise unelastischen PTFE-Dichtringe sind O-Ringe, deren elastischer Kern mit FEP oder PFA ummantelt ist. FEP ist die Kurzbezeichnung für Tetrafluorethylen-Hexafluorpropylen und hat ähnliche Eigenschaften wie PTFE, insbesondere eine hohe chemische Resistenz und ein gutes Reibungsverhalten. Im Gegensatz zu PTFE ist FEP thermoplastisch umformbar. PFA ist die Abkürzung für Perfluoralkoxyalkan, welches ebenso sehr ähnliche Eigenschaften zu PTFE hat. Es lässt sich ebenfalls thermoplastisch verarbeiten. Als Material für den ringförmigen Kern kommen hier regelmäßig Fluorkautschuk (FKM), Silikonkautschuk (VMQ), Ethylen-Propylen-Dien-Kautschuk oder andere herkömmliche Elastomere in Frage. Die FEP- oder PFA-Ummantelung des Kerns wird im Spritzgießprozess nahtlos erzeugt, d. h. der Elastomerinnenring wird als Einlegeteil in ein Spritzwerkzeug eingesetzt und dann mit FEP oder PFA umspritzt. Typische Einsatzgebiete von FEP- oder PFAummantelten O-Ringen sind die chemische Industrie, Petrochemie, Medizintechnik, Lebensmittelindustrie, Wasser und Abwassertechnik und ähnliche Industriebereiche, beispielsweise zur Abdichtung von Armaturenspindeln oder als Sekundär-Dichtelement für Gleitringdichtungen. Sie werden vorwiegend als statische Dichtung verwendet oder als Dichtelement für langsame Schalt- und Drehbewegungen (Katalog "O-Ringe und Stützringe" der Firma Trelleborg Sealing Solutions, Ausgabe April 2012).

Als Alternative dazu gibt es PTFE-ummantelte O-Ringe, die entweder mit einer PTFE-Beschichtung, welche aus einem Compound aus gelöstem PTFE hergestellt wird, oder mit einer PTFE-Umhüllung, welche zumeist aus einer Schälfolie hergestellt wird, verfügbar sind. PTFE-beschichtete O-Ringe haben den Nachteil, dass der Mantel schnell abgerieben wird, die Ummantelung somit keinen ausreichenden Schutz gegen aggressive Chemikalien bietet. PTFE-umhüllte O-Ringe haben dagegen den Nachteil, dass der Aufbau der Hülle das Eindringen von Chemikalien erlaubt, weil die PTFE-Hülle als offene Ummantelung entweder mit einer Stoßfuge oder mit einander überlappenden Randbereichen ausgebildet ist. Im Gebrauch wird die Stoßfuge oder das Überlappungsende daher entweder auf der gegenüberliegenden Seite des zu trennenden Mediums angeordnet oder zumindest entgegen der Angriffsrichtung des Mediums ausgerichtet. Im Gegensatz zu FEP und PFA handelt es sich bei PTFE nicht um ein thermoplastisches Material, sondern um ein gesintertes Pulver, aus welchem kein Schlauchmaterial gefertigt werden kann, weil die Temperaturen beim Herstellungsprozess so hoch wären, dass sie das Elastomermaterial des O-Ring-Kerns zerstören würden, so dass mit PTFE, anders als mit FEP und PFA, eine nahtlose Ummantelung nicht möglich ist (Katalog "FEP/PFA-ummantelte O-Ringe / Technologie.Anwendung. Produkte" von Freudenberg Process Seals, abrufbar unter www.freudenberg-process-seals.com).

Ähnliche Ringdichtungen sind auch aus GB 2 264 986 A und US 3 549 156 A bekannt.

Aufgabe der vorliegenden Erfindung ist es, eine alternative Ringdichtung zu den zuvor beschriebenen ummantelten Ringdichtungen vorzuschlagen, welche in den genannten Anwendungsgebieten einsetzbar ist.

Diese Aufgabe wird durch eine Ringdichtung mit den Merkmalen des Anspruchs 1 gelöst. In davon abhängigen Ansprüchen sind vorteilhafte Weiterbildungen und Ausgestaltungen der Erfindung angegeben.

Dementsprechend umfasst die Ringdichtung einen ringförmigen elastomeren Kern und eine den Kern umschließende Ummantelung, welche mindestens eine Folie aus einem Fluorpolymer, vorzugsweise aus Polytetrafluorethylen, aufweist. Die Randbereiche der Folie sind so miteinander verbunden, dass der Kern gegenüber der Umgebung abgedichtet ist, d. h., die Ummantelung schützt den elastomeren Kern gegen Eindringen des abzudichtenden Mediums. Im einfachsten Fall sind die Randbereiche miteinander verklebt, vorzugsweise jedoch verschweißt. Es gibt also anders als bei mit FEP oder PFA nahtlos ummantelten O-Ringen ein oder mehrere Nahtlinien. Vorzugsweise wird die Ummantelung nicht mit dem Kern verbunden.

Soweit ersichtlich zielten bisherige Versuche zur abdichtenden Ummantelung des elastomeren Kerns mit einer Folie aus PTFE darauf ab, die PTFE-Folie in irgendeiner Weise mit dem elastomeren Kern zu verbinden. Es hat sich nun herausgestellt, dass eine Ringdichtung, bei der nur die Randbereiche der den Kern umhüllenden Folie miteinander verbunden sind, zu einer zuverlässigen Isolierung des elastomeren Kerns gegenüber der Umgebung und gleichzeitig zu einer Ringdichtung mit ausgezeichneten Eigenschaften führt. Wenn die Ummantelung nicht mit dem Kern verbunden ist, können Spannungserhöhungen innerhalb der Ringdichtung bei sich ändernden Temperaturen, die aufgrund der unterschiedlichen Wärmeausdehnungskoeffizienten des elastomeren Kerns einerseits und der umhüllenden Folie andererseits ansonsten auftreten, minimiert werden.

Vorzugsweise wird die Ummantelung aus zwei Folien gefertigt, und die Randbereiche der einen Folie werden in abdichtender Weise mit den Randbereichen der anderen Folie verbunden, so dass sich im Ergebnis zwei ringförmige Nahtlinien ergeben. Dies hat sich aus fertigungstechnischer Sicht als vorteilhaft gegenüber der Verwendung nur einer Folie erwiesen, insbesondere in Hinblick auf die Vermeidung von Faltenbildungen.

Besonders bevorzugt zur Vermeidung von Faltenbildungen ist es, wenn die Folie als vorgeformte, ringförmige Schale zur Verfügung gestellt wird, in der bevorzugten Ausführungsform somit in Form von zwei Halbschalen. Aufgrund der Vorformung ist die Schale formstabil und der ringförmige elastomere Kern kann in die Schale auf relativ einfache Weise eingesetzt werden, bevor die Randbereiche der Schale (oder Schalen) miteinander verbunden werden.

Soweit die Ummantelung aus zwei Folien oder Schalen gebildet wird, sind diese vorzugsweise so dimensioniert, dass die sich bei der Verbindung der Randbereiche ergebenden Nahtlinien auf einander diametral gegenüberliegenden Seiten der Ringdichtung verlaufen. Aufgrund dieser Symmetrie gleichen sich Spannungen, welche bei der Herstellung der Ummantelung in der Ringdichtung induziert werden, zum großen Teil aus. Die beiden Nahtlinien können je nach Anwendungsfall vorteilhaft zum Beispiel im gleichen Abstand (auf 12 Uhr und 6 Uhr), im 45° Winkel (auf 4:30 Uhr und 10:30 Uhr bzw. 7:30 Uhr und 1:30 Uhr) oder konzentrisch in einer Ebene (auf 3 Uhr und 9 Uhr) zur zentralen Achse der Ringdichtung angeordnet sein. Die Nahtlinien können aber auch, wenn erforderlich, versetzt angeordnet werden. Die PTFE ummantelten Ringdichtungen werden bevorzugt für statische Dichtungen verwendet, insbesondere für Axialdichtungen. Für diesen Fall ist es in der Regel vorteilhaft, die Nahtlinien konzentrisch vorzusehen, nämlich radial innen und radial außen vom elastomeren Kern.

Während es prinzipiell möglich ist, die Randbereiche der Folie auf Stoß zu fügen und im Bereich der Stoßfuge z.B. durch eine Stumpfnaht abdichtend miteinander zu verbinden, sieht eine bevorzugte Ausführung der Erfindung vor, dass die Randbereiche einander überlappen und die Verbindung im Überlappungsbereich erfolgt. Sofern die Ummantelung aus zwei vorgeformten Schalen hergestellt wird, umgibt dann jede der beiden Schalen etwas mehr als die Hälfte des Kernquerschnitts, so dass sich die Randbereiche der beiden Schalen entsprechend überlappen.

Als Material für den elastomeren Kern gibt es keine Beschränkungen, sondern alle dem Fachmann bekannte Materialien, Formen, Querschnittsgeometrien und Größen können verwendet werden.

Das Fluorpolymer, aus welchem die umhüllende Folie gefertigt ist, besteht, wie erwähnt, vorzugsweise aus Polytetrafluorethylen (PTFE). PTFE zeichnet sich durch eine gute Chemikalienbeständigkeit und einen weiten Temperatureinsatzbereich von nahe -273°C bis zu 260°C aus. Vorzugsweise wird gerecktes Polytetrafluorethylen (ePTFE), insbesondere biaxial gerecktes ePTFE, verwendet, welches zusätzlich verdichtet worden ist. Da gerecktes PTFE porös ist, wird das verdichtete ePTFE als Folienmaterial eingesetzt, welches äußerst dicht und mit sehr geringen Schichtdicken herstellbar ist. Anstelle von PTFE kann die Fluorpolymerfolie aus einem thermoplastischen Fluorpolymer bestehen, insbesondere aus FEP oder PFA.

Bevorzugt werden die Randbereiche der Folie ohne Einsatz eines separaten Klebers miteinander verbunden. Das ist im Falle einer thermoplastischen Fluorpolymerfolie durch lokales Aufschmelzen ohne Weiteres möglich. Im Falle einer PTFE-Folie wird diese zuvor vorzugsweise mit einem thermoplastischen Material beschichtet. Die beschichtete Folie hat dann vorzugsweise eine Gesamtdicke im Bereich von nur 15 bis 100 µm. Die Folie und die Beschichtung haben dabei vorzugsweise in etwa gleiche Dicken. Es kann vorteilhaft sein, mit steigender Dicke des Ringkerns auch eine dickere Folie zu wählen. Jedoch ist die Folie möglichst dünn zu wählen, weil sich die Shore-Härte der Dichtung mit steigender Foliendicke entsprechend erhöht. Durch Aufschmelzen der Beschichtung in den miteinander zu verbindenden Randbereichen gehen die Randbereiche, d. h. die thermoplastische Beschichtung der Randbereiche, eine stoffflüssige Verbindung miteinander ein, die nach Abkühlung des thermoplastischen Materials und entsprechendem Übergang in die feste Phase stabil und dicht ist. Als Material für die thermoplastische Beschichtung kommen bevorzugt Fluor-Thermoplaste, insbesondere Tetrafluorethylen-Hexafluorpropylen (FEP), Perfluoralkoxyalkan (PFA) oder Tetrafluorethylen-Hexafluorpropylen-Vinylidenfluorid (TFP; auch bekannt als THV ® von Dyneon), in Betracht. Vorzugsweise wird die Folie mit diesem thermoplastischen Beschichtungsmaterial laminiert. Eine besonders vorteilhafte, kleberfreie Laminierung von PTFE mit einem derartigen thermoplastischen Material wird in WO 2005/105434 A2 beschrieben. Dazu wird die PTFE-Folie auf eine Temperatur oberhalb der kristallinen Schmelztemperatur von PTFE erhitzt, beispielsweise über 370°C, und bei dieser Temperatur eine Folie aus dem thermoplastischen Beschichtungsmaterial auf die PTFE-Folie auflaminiert. Je nach Anwendungsfall kann es vorteilhaft sein, die PTFE-Folie beidseitig mit Fluor-Thermoplast zu beschichten.

Es genügt in vielen Fällen und ist aus Kostengründen zu bevorzugen, wenn die Folie nur einseitig thermoplastisch beschichtet wird. Für den Fall, dass die Ummantelung aus zwei Folien oder vorgeformten Schalen gebildet wird, liegt das Beschichtungsmaterial bei der einen Folie oder Schale vorzugsweise auf der Innenseite und bei der anderen Folie oder Schale vorzugsweise auf der Außenseite, so dass sich die Randbereiche der Folien oder Schalen mit dem jeweiligen Beschichtungsmaterial überlappen lassen, ohne dass ein Randbereich umgefaltet werden oder andere Maßnahmen getroffen werden müssen.

Die Verbindung der Randbereiche erfolgt dementsprechend auf thermischem Wege durch lokales Aufschmelzen der thermoplastischen Beschichtung im Nahtbereich. Um bei dem entsprechenden Erwärmungsvorgang den erforderlichen Energieeintrag auf die thermoplastische Beschichtung zu konzentrieren, sieht eine vorteilhafte Weiterbildung der Erfindung vor, das thermoplastische Beschichtungsmaterial von mindestens einer Folie mit geeigneten Additiven auszurüsten. Beispielsweise kann ein Additiv gewählt werden, welches induktiv, also berührungslos, aufgeheizt werden kann. In diesem Fall kann bei der Verwendung von zwei oder mehr Folien oder Schalen das Beschichtungsmaterial aller Folien oder Schalen entsprechende Additive enthalten. Andere Schweißverfahren, je nach dem mit oder ohne geeignete Additive, sind das Widerstandsschweißen, Schweißen mittels Heißluft, Laserstrahlschweißen und dergleichen.

Besonders bevorzugt ist daher der Einsatz von sogenannten Laseradditiven. Das sind Additive, die Strahlung einer oder mehrerer Wellenlängen oder Wellenlängenbereiche absorbieren. Die Additive werden so gewählt, dass sie solche Strahlung absorbieren, für welche die Ummantelung, insbesondere also die PTFE-Folie, transparent ist. Dann ist es möglich, im sogenannten Laserdurchstrahlverfahren mit Laserstrahlung einer geeigneten Wellenlänge durch die Folie hindurch gezielt nur das dahinter liegende thermoplastische Material, also insbesondere das thermoplastische Beschichtungsmaterial, aufzuschmelzen. Als Additive kommen z.B. Farbstoffe, insbesondere Rußpartikel, in Betracht. Da unterschiedliche Thermoplaste unterschiedliche Absorptionseigenschaften haben und da des Weiteren unterschiedliche Laser (Diodenlaser, CO₂-Laser, etc.) Laserstrahlung mit unterschiedlicher Wellenlänge aussenden, kann bei geeigneter Kombination von Laser einerseits und Materialien der Ummantelung andererseits auf die Zugabe spezieller Laseradditive gegebenenfalls auch verzichtet werden. Es genügt für das Laserdurchstrahlverschweißen, wenn bei der Verwendung von z.B. zwei Folien nur das Beschichtungsmaterial einer der Folien Laseradditive enthält, weil die Schmelzwärme von dem aufgeschmolzenen Beschichtungsmaterial des Randbereichs einer Folie das Beschichtungsmaterial des gegenüberliegenden Randbereichs der anderen Folie mit aufschmelzt. Es sind allerdings auch andere Laserschweißverfahren zur Verbindung der Randbereiche einsetzbar, wie beispielsweise das Laserstumpfschweißen für den Fall, dass die Randbereiche der Umhüllung auf Stoß liegen und eine Stumpfschweißnaht mittels Laser erzeugt wird.

Besonders bevorzugt ist es, wenn die Folie als vorgeformte Schale ausgebildet ist, die im Querschnitt polygonförmig ist und die der Außenkontur des Elastomerrings bündig folgt. Da sich das elastomere Kernmaterial üblicherweise bei Temperaturerhöhung stärker ausdehnt, als die Fluorpolymer-Ummantelung, kann sie sich innerhalb der polygonförmigen Schale ausdehnen. Schale und Kern nehmen dabei zunehmend einen kreisförmigen Querschnitt an. In diesem Zusammenhang ist es wiederum von Vorteil, wenn die Ummantelung nicht mit dem elastomeren Kern verbunden ist. Besonders bevorzugt ist es, wenn die Übergänge der Seitenflächen des Polygons zumindest auf der dem elastomeren Kern zugewandten Innenseite gerundet und insbesondere nicht kantig sind. Der elastomere Kern besitzt dementsprechend analoge Formen an seinen Eckbereichen. Er liegt vorzugsweise eng an der Ummantelung an. Spannungen, die der sich bei Temperaturerhöhung ausdehnende elastomere Kern auf die Umhüllung ausübt, werden dadurch insbesondere im Übergangsbereich zwischen den Polygonflächen der Schale gering gehalten.

Die Erfindung betrifft des Weiteren ein Verfahren zur Herstellung der vorbeschriebenen Ringdichtung.

Nachfolgend wird die Erfindung exemplarisch anhand der begleitenden Zeichnungen erläutert. Darin zeigen:
Fig. 1 einen O-Ring gemäß einem ersten Ausführungsbeispiel in Aufsicht,
Fig. 2 einen axialen Querschnitt durch den O-Ring aus Fig. 1 in vergrößerter Darstellung,
Fig. 3 den Querschnitt eines O-Rings gemäß einem zweiten Ausführungsbeispiel,
Fig. 4 eine vergrößerte Darstellung eines Eckbereichs des Querschnitts aus Fig. 3,
Fig. 5A und 5B verschiedene Varianten von O-Ring-Querschnitten,
Fig. 6A bis 6C aufeinander folgende Schritte bei der Herstellung des O-Rings aus Fig. 1 und 2.

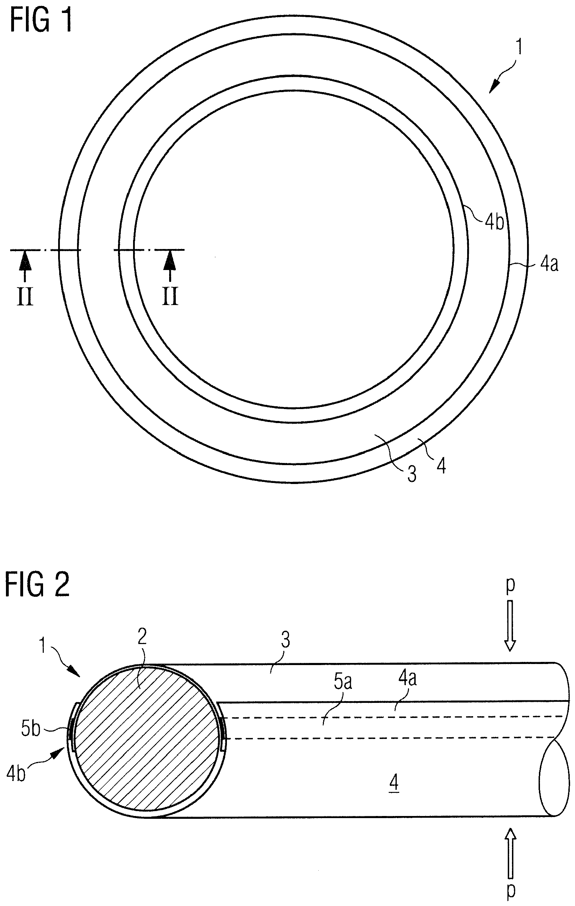

Fig. 1 zeigt einen O-Ring 1 gemäß einem ersten Ausführungsbeispiel in Aufsicht. Fig. 2 zeigt einen Querschnitt durch den O-Ring 1 aus Fig. 1 gemäß der Schnittlinie II-II in vergrößerter Darstellung. Der O-Ring 1 besteht im wesentlichen aus einem ringförmigen elastomeren Kern 2, der mit einer ersten Folie 3 und einer zweiten Folie 4 umhüllt ist, die gemeinsam die Ummantelung des Kerns 2 bilden. Der elastomere Kern kann im Querschnitt rund sein oder unterschiedlichste andere Querschnittsgeometrien aufweisen. Die äußere Folie 4 überlappt dabei mit ihren Randbereichen 4a und 4b die entsprechenden Randbereich der inneren Hülle 3. Im Überlappungsbereich sind die beiden Folien 3, 4 entlang zweier Nahtlinien 5a und 5b in abdichtender Weise miteinander verbunden, beispielsweise verklebt oder vorzugsweise verschweißt. Die Nahtlinien 5a und 5b verlaufen dementsprechend rundherum entlang dem gesamten Umfang des O-Rings. Der Ring wird bevorzugt als axialer, statischer Dichtring eingesetzt, welcher dementsprechend in Pfeilrichtung p von oben und unten mit Kompressionskräften beaufschlagt wird. Diese Anwendung ist weniger sensibel bei Faltenbildungen der Folie 4 im Einsatzfall. Die hier beschriebenen Dichtungen sind aber prinzipiell auch als dynamische Dichtungen einsetzbar, z.B. mit anderen Nahtlagen als Kolben- oder Stangendichtung.

Als Material für den Kern 2 kommt jedes geeignete Elastomermaterial in Betracht. Bei dem Material der Folien 3 und 4 für die Ummantelung des Kerns 2 wird vorzugsweise ein Fluorpolymer gewählt, beispielsweise ein thermoplastisches Fluorpolymer oder vorzugsweise Polytetrafluorethylen (PTFE) in der ein oder anderen Ausprägung. Besonders bevorzugt ist gerecktes, insbesondere biaxial gerecktes, und verdichtetes PTFE. Die Herstellung von verdichtetem ePTFE ist beispielsweise in US 5,374,473 (Knocks et al.) beschrieben. Als besonders geeignet haben sich verdichtete, biaxial gereckte PTFE-Folien erwiesen, wie sie in WO 2005/105434 A1 beschrieben werden, insbesondere gemäß den dort beschriebenen Herstellungsbeispielen. Insoweit wird der Inhalt der WO 2005/105434 A1 explizit in Bezug genommen. Um diese Folien im Überlappungsbereich durch Wärmeeinwirkung entlang der Nahtlinien 5a und 5b miteinander verschweißen zu können, können sie mit einer thermoplastischen Beschichtung versehen sein, insbesondere laminiert sein, so wie dies beispielsweise ebenfalls in WO 2005/105434 anhand einer PFA-Beschichtungsfolie beschrieben wird ("example 2"). Auch insoweit wird die dortige Offenbarung explizit in Bezug genommen.

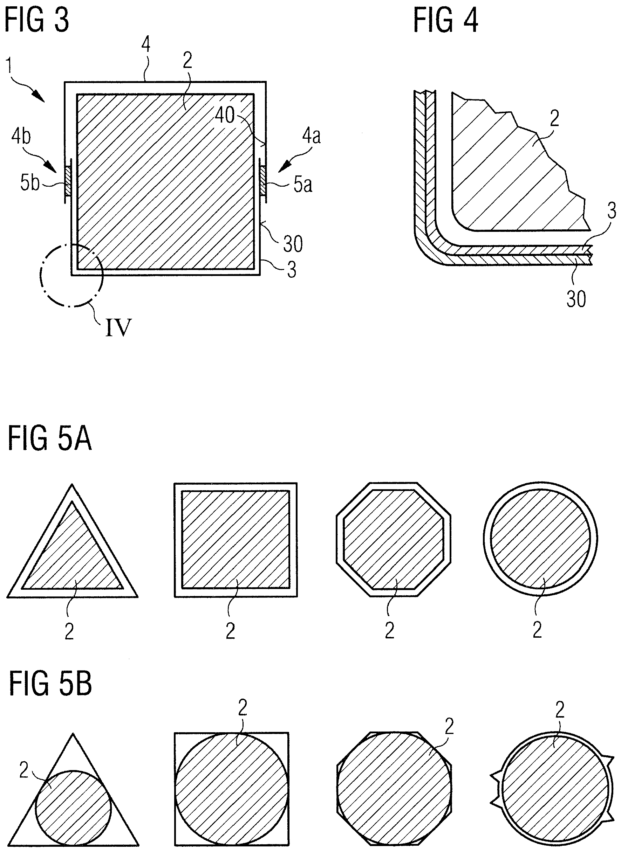

Fig. 3 betrifft einen O-Ring gemäß einem zweiten Ausführungsbeispiel, der sich vom ersten Ausführungsbeispiel insbesondere durch seine Querschnittsform unterscheidet, welche rechteckig, insbesondere quadratisch, ist. Dementsprechend ist in Fig. 3 lediglich der Ring-Querschnitt schematisch dargestellt. Der Ring 1 umfasst wiederum einen elastomeren Kern 2 und zwei den Kern 2 umhüllende Folien 3 und 4, die eine dichte Ummantelung um den Kern 2 herum bilden. Abweichend von der schematischen Darstellung ist es tatsächlich bevorzugt, wenn die Ummantelung eng am Kern anliegt. In den Überlappungsbereichen, in denen die Folie 4 mit ihren Randbereichen 4a und 4b die entsprechenden Randbereiche der Folie 3 überlappt, sind die Folien entlang der Nahtlinien 5a, 5b abdichtend und umlaufend miteinander verbunden. Mit den Bezugsziffern 30 und 40 ist angedeutet, dass die Folien 3 und 4 auf den einander zugewandten Oberflächen mit einer thermoplastischen Beschichtung 30 bzw. 40 versehen sind. Bei der Folie 3 liegt die Beschichtung 30 außen und bei der Folie 4 liegt die Beschichtung 40 innen, so dass die Beschichtungen 30, 40 im Überlappungsbereich aufeinander liegen. Es handelt sich bei der Folie vorzugsweise um PTFE und bei den thermoplastischen Beschichtungen vorzugsweise um FEP, PFA oder TFP. Die Beschichtungen 30 und 40 sind entlang der Nahtlinien 5a, 5b miteinander verschweißt.

Die Folien 3 und 4 in den Ausführungsbeispielen gemäß Fig. 2 und 3 werden als vorgeformte und dementsprechend relativ formstabile Schalen zur Verfügung gestellt, welche ihrerseits durch Tiefziehen entsprechender Folien unter Wärmeinwirkung und anschließendem Zuschneiden herstellbar sind. Der elastomere Kern 2 und die schalenförmigen Folien besitzen die gleiche Querschnittsform. Auch andere polygone Querschnitte sind möglich, beispielsweise dreieckige, hexagonale oder oktagonale Querschnitte. Schalen mit polygonalem oder auch ovalem Querschnitt bieten gegenüber Schalen mit kreisrundem Querschnitt den Vorteil, dass sie sich im Falle einer überproportionalen thermischen Ausdehnung des Kerns hin zu einem kreisförmigen Querschnitt verformen und so dem vergrößerten Volumen des Kerns Platz bieten können. Spannungen in der Ummantelung werden dadurch gering gehalten. Im Falle polygonaler Querschnitte der die Ummantelung bildenden Schalen ist es vorteilhaft, wenn die Übergänge zwischen den Polygonflächen zumindest auf der dem elastomeren Kern 2 zugewandten Seite der Schale bzw. Folie 3, wie auch der Kern 2 selbst, gerundet sind. Dies ist in Figur 4 in etwas größerem Detail dargestellt. Der Kern 2 ist in entsprechender Weise gerundet. Auf diese Weise können Spannungen, die bei Temperaturerhöhung aufgrund des sich stärker ausdehnenden elastomeren Kerns 2 gegenüber dem sich weniger stark ausdehnenden Umhüllungsmaterial 3, 30 gering gehalten werden. Wenn der Kern 2 nicht mit der Umhüllung verbunden ist, können die aneinander grenzenden Oberflächen während des thermischen Ausdehnungsprozesses aneinander entlang gleiten. Die Spannungskompensation durch die gewählten Geometrien kommt besonders bei hohen Einsatztemperaturen zum Tragen, etwa bei über 200°C. Als geeignete Materialkombination für derart hohe Temperaturen kommt z.B. ein Kern aus hochtemperaturfestem Silikon mit einer PTFE-Umhüllung mit PFA-Beschichtung in Betracht.

Die Kontur des elastomeren Kerns muss jedoch nicht, wie in Fig. 5A gezeigt, notwendiger Weise der Kontur der Schale angepasst sein. Fig. 5B zeigt mehrere Varianten, bei denen der elastomere Kern 2 eine andere Querschnittsform als die polygonale Ummantelung aufweist. Beispielsweise kann der Kern in herkömmlicher Weise einen kreisrunden Querschnitt besitzen, während die Ummantelung dreieckig, quadratisch, hexagonal oder in anderer Weise polygonförmig ist. Alternativ kann die Schale Falten aufweisen. Im Falle einer thermischen Ausdehnung des Kerns 2, kann sich dieser in der Ummantelung ausbreiten, und Freiräume ausfüllen, wodurch wiederum Spannungen in der Ummantelung gering gehalten werden. Mit zunehmender Ausdehnung des Kerns 2 nimmt die Ummantelung dann einen zunehmend kreisförmigeren Querschnitt an.

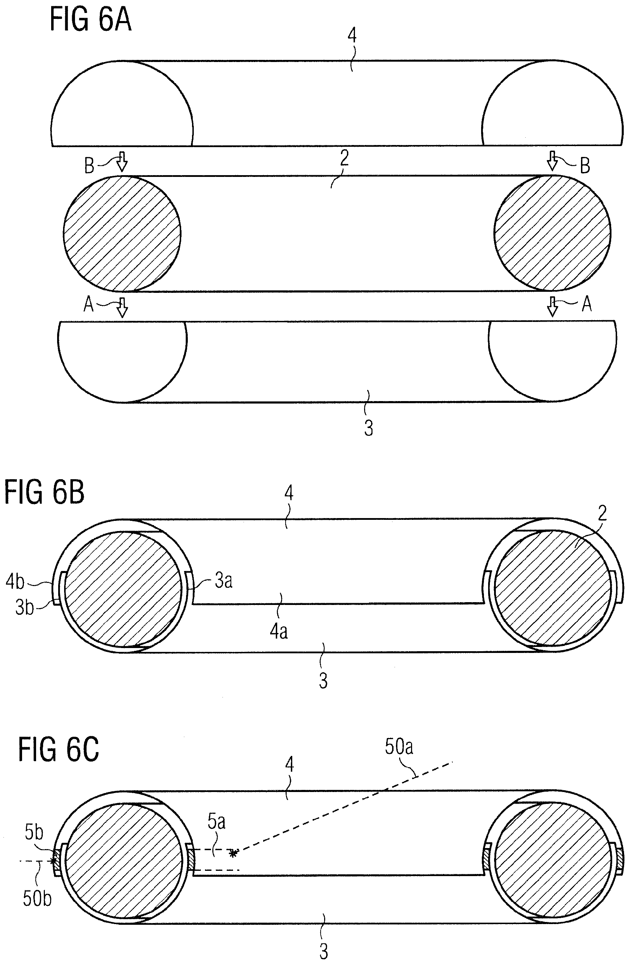

Fig. 6 zeigt die drei wesentlichen Phasen bei der Herstellung der Ringdichtung 1. Zunächst werden der elastomere Kern 2 und zwei vorgeformte, ringförmige Schalen zur Verfügung gestellt. In einem ersten Schritt A wird der Kern 2 in die untere Schale 3 eingelegt, und in einem zweiten Schritt B wird die obere Schale 4 über den Kern 2 gestülpt, sodass die Schalen 3 und 4 den Kern 2 umhüllen. Wie in Fig. 6B gezeigt, überlappen sich dabei die Randbereiche 3a, 3b der unteren Schale 3 mit den Randbereichen 4a, 4b der oberen Schale 4 auf Höhe des Meridians des Kerns 2. Im nächstfolgenden Schritt C werden die Schalen 3 und 4 entlang ihres Überlappungsbereichs im Laserdurchstrahlschweißverfahren miteinander verschweißt. Dabei entstehen zwei Nahtlinien 5a und 5b, welche letztendlich eine vollständig geschlossene und dichte kreisförmige Naht bilden. Das Material der Folie 4 ist für die gewählte Laserstrahlung 50a und 50b transparent, und die thermoplastischen Beschichtungen der Folien 3 und 4 sind entweder von Natur aus oder durch entsprechende Dotierung mit Additiven für diese Strahlung absorbierend. Es genügt, wenn die Beschichtung der Folie 3 diese Strahlung absorbiert, weil durch Wärmeleitung thermische Energie auf die entsprechend angrenzende thermoplastische Beschichtung der anderen Folie übertragen wird.

## Patentansprüche

1. Ringdichtung (1), umfassend einen ringförmigen elastomeren Kern (2) und eine den Kern umschließende Ummantelung, welche zwei Folien (3, 4) aus einem Fluorpolymer aufweist, wobei die Randbereiche (3a, 3b) der einen Folie (3) mit den Randbereichen (4a, 4b) der anderen Folie (4) verbunden sind, **dadurch gekennzeichnet, dass** die Randbereiche (3a, 3b, 4a, 4b) einander überlappen.

2. Ringdichtung nach Anspruch 1, wobei die Ummantelung nicht mit dem Kern (2) verbunden ist.

3. Ringdichtung nach Anspruch 1, wobei die Verbindung der Randbereiche (3a, 3b, 4a, 4b) entlang zweier Nahtlinien (5a, 5b) auf einander diametral gegenüber liegenden Seiten der Ringdichtung (1) verläuft.

4. Ringdichtung nach Anspruch 3, wobei eine der beiden Nahtlinien (5a) radial innen und die andere der beiden Nahtlinien (5b) radial außen verläuft.

5. Ringdichtung nach einem der Ansprüche 1 bis 4, wobei die Folien (3, 4) aus Polytetrafluorethylen (PTFE), vorzugsweise aus verdichtetem, gereckten Polytetrafluorethylen bestehen.

6. Ringdichtung nach einem der Ansprüche 1 bis 5, wobei die Folie (3, 4) mit thermoplastischem Material (30, 40) beschichtet, vorzugsweise laminiert, besonders bevorzugt kleberfrei laminiert ist.

7. Ringdichtung nach Anspruch 6, wobei das Beschichtungsmaterial (30, 40) ein Thermoplast ist.

8. Ringdichtung nach Anspruch 6 oder 7, wobei das Beschichtungsmaterial (30, 40) ein thermoplastisches Fluorpolymer, FEP, PFA oder TFP ist.

9. Ringdichtung nach einem der Ansprüche 6 bis 8, wobei das Beschichtungsmaterial (30, 40) nur auf einer Seite der Folie (3, 4) vorgesehen ist.

10. Ringdichtung nach einem der Ansprüche 6 bis 9, wobei die Randbereiche (3a, 3b, 4a, 4b) einander so überlappen, dass das Beschichtungsmaterial (30, 40) im Überlappungsbereich aufeinander liegt.

11. Ringdichtung nach einem der Ansprüche 6 bis 10, wobei das Beschichtungsmaterial (30, 40) von mindestens einer der Folien (3, 4) ein Additiv enthält, welches ein berührungsloses Aufschmelzen der thermoplastischen Beschichtung fördert.

12. Ringdichtung nach Anspruch 11, wobei das Additiv Strahlung absorbiert, für welche die Ummantelung im Übrigen transparent ist.

13. Ringdichtung nach einem der Ansprüche 1 bis 12, wobei die abdichtende Verbindung der Randbereiche (3a, 3b, 4a, 4b) eine Schweißverbindung, vorzugsweise eine Laserschweißverbindung, besonders bevorzugt eine Laserdurchstrahlschweißverbindung, ist.

14. Ringdichtung nach einem der Ansprüche 1 bis 13, wobei die Folien (3, 4) als formstabile, ringförmige Schalen ausgebildet sind.

15. Ringdichtung nach Anspruch 14, wobei die Schalen im Querschnitt polygonförmig sind.

16. Ringdichtung nach Anspruch 15, wobei Übergänge zwischen Polygonflächen der Schalen zumindest auf der dem elastomeren Kern (2) zugewandten Seite der Schale gerundet sind.

17. Verfahren zur Herstellung einer Ringdichtung (1), umfassend die Schritte:
- zur Verfügung Stellen eines Elastomerrings (2),
- zur Verfügung Stellen von zwei Fluorpolymerfolien (3, 4),
- Ummanteln des Elastomerrings (2) mit den Folien (3, 4) und
- Verbinden von Randbereichen (3a, 3b) der einen Folie (3) mit Randbereichen (4a, 4b) der anderen Folie (4), wobei die Randbereiche (3a, 3b, 4a, 4b) einander überlappen.

18. Verfahren nach Anspruch 17, wobei die Randbereiche (3a, 3b, 4a, 4b) der Folien (3, 4) miteinander verbunden werden ohne eine Verbindung der Ummantelung mit dem Elastomerring (2) herzustellen.

19. Verfahren nach Anspruch 17 oder 18, wobei die Folien (3, 4) in Gestalt von zwei vorgeformten, ringförmigen Schalen aus verdichtetem, gereckten PTFE zur Verfügung gestellt werden, wobei die eine Schale zumindest auf ihrer Innenseite und die andere Schale zumindest auf ihrer Außenseite mit thermoplastischem Material (30, 40) beschichtet ist und die Randbereiche (3a, 3b, 4a, 4b) der beiden Schalen einander so überlappen, dass ihre thermoplastischen Beschichtungen (30, 40) einander berühren, wobei das Verbinden der Randbereiche (3a, 3b, 4a, 4b) im Laserdurchstrahlschweißverfahren erfolgt.

## Claims

1. Ring seal (1), comprising an annular elastomeric core (2) and sheathing surrounding the core, the sheathing having two films (3, 4) of a fluoropolymer, wherein the edge regions (3a, 3b) of the one film (3) are connected to the edge regions (4a, 4b) of the other film (4), **characterised in that** the edge regions (3a, 3b, 4a, 4b) overlap each other.

2. Ring seal according to claim 1, wherein the sheathing is not connected to the core (2).

3. Ring seal according to claim 1, wherein the connection of the edge regions (3a, 3b, 4a, 4b) extends along two seam lines (5a, 5b) on diametrically opposite sides of the ring seal (1).

4. Ring seal according to claim 3, wherein one of the two seam lines (5a) extends radially inwards and the other of the two seam lines (5b) extends radially outwards.

5. Ring seal according to any of claims 1 to 4, wherein the films (3, 4) of polytetrafluoroethylene (PTFE) preferably consist of compacted expanded polytetrafluoroethylene.

6. Ring seal according to any of claims 1 to 5, wherein the film (3, 4) is coated with thermoplastic material (30, 40), preferably laminated, particularly preferably laminated using no adhesive.

7. Ring seal according to claim 6, wherein the coating material (30, 40) is a thermoplastic.

8. Ring seal according to claim 6 or 7, wherein the coating material (30, 40) is a thermoplastic fluoropolymer, FEP, PFA or TFP.

9. Ring seal according to any of claims 6 to 8, wherein the coating material (30, 40) is provided only on one side of the film (3, 4).

10. Ring seal according to any of claims 6 to 9, wherein the edge regions (3a, 3b, 4a, 4b) overlap each other in such a manner that in the overlap region the coating materials (30, 40) lie on top of each other.

11. Ring seal according to any of claims 6 to 10, wherein the coating material (30, 40) of at least one of the films (3, 4) contains an additive which promotes contactless melting of the thermoplastic coating.

12. Ring seal according to claim 11, wherein the additive absorbs radiation, for which, moreover, the sheathing is transparent.

13. Ring seal according to any of claims 1 to 12, wherein the sealing connection of the edge regions (3a, 3b, 4a, 4b) is a welded joint, preferably a laser welded joint, particularly preferably a laser transmission welded joint.

14. Ring seal according to any of claims 1 to 13, wherein the films (3, 4) are formed as dimensionally stable annular shells.

15. Ring seal according to claim 14, wherein the shells are polygonal in cross-section.

16. Ring seal according to claim 15, wherein transitions between polygonal surfaces of the shells are rounded, at least on the side of the shell facing the elastomeric core (2).

17. Process for producing a ring seal (1), comprising the steps below:
- provision of an elastomeric ring (2),
- provision of two fluoropolymer films (3, 4),
- sheathing of the elastomeric ring (2) with the films (3, 4) and
- connection of edge regions (3a, 3b) of the one film (3) with edge regions (4a, 4b) of the other film (4), with the edge regions (3a, 3b, 4a, 4b) overlapping one another.

18. Process according to claim 17, wherein the edge regions (3a, 3b, 4a, 4b) of the films (3, 4) are connected to each other without making a connection between the sheathing and the elastomeric ring (2).

19. Process according to claim 17 or 18, wherein the films (3, 4) are provided in the form of two preformed annular shells of compacted expanded PTFE, wherein at least the inside of the one shell and at least the outside of the other shell is coated with thermoplastic material (30, 40) and the edge regions (3a, 3b, 4a, 4b) of both shells overlap each other in such a manner that their thermoplastic coatings (30, 40) contact each other, with the joining of the edge regions (3a, 3b, 4a, 4b) being effected by the laser transmission welding process.

## Revendications

1. Joint torique (1) comprenant un noyau élastomère annulaire (2) et une enveloppe entourant le noyau, laquelle est constituée de deux feuilles (3, 4) en fluoropolymère, où les zones de bordure (3a, 3b) de l'une des feuilles (3) sont reliées aux zones de bordure (4a, 4b) de l'autre feuille (4), **caractérisé en ce que** les zones de bordure (3a, 3b, 4a, 4b) se chevauchent les unes les autres.

2. Joint torique selon la revendication 1, où l'enveloppe n'est pas reliée au noyau (2).

3. Joint torique selon la revendication 1, où les zones de bordure (3a, 3b, 4a, 4b) sont reliées le long des deux coutures (5a, 5b) sur les côtés diamétralement opposés du joint torique (1).

4. Joint torique selon la revendication 3 où une des deux coutures (5a) s'étend radialement à l'intérieur et l'autre des deux coutures (5b) s'étend radialement à l'extérieur.

5. Joint torique selon l'une quelconque des revendications 1 à 4, où les feuilles (3, 4) sont en polytétrafluoroéthylène (PTFE), de préférence en polytétrafluoroéthylène compacté et étiré.

6. Joint torique selon l'une quelconque des revendications 1 à 5, où la feuille (3, 4) est revêtue de matériau thermoplastique (30, 40), de préférence stratifiée, plus préférablement stratifiée sans colle.

7. Joint torique selon la revendication 6, où le matériau de revêtement (30, 40) est un thermoplastique.

8. Joint torique selon la revendication 6 ou 7, où le matériau de revêtement (30, 40) est un fluoropolymère thermoplastique, FEP, PFA ou TFP.

9. Joint torique selon l'une quelconque des revendications 6 à 8, où le matériau de revêtement (30, 40) n'est prévu que sur un seul côté de la feuille (3, 4).

10. Joint torique selon l'une quelconque des revendications 6 à 9, où les zones de bordure (3a, 3b, 4a, 4b) se chevauchent les unes les autres de sorte que le matériau de revêtement (30, 40) est superposé dans la zone de chevauchement.

11. Joint torique selon l'une quelconque des revendications 6 à 10, où le matériau de revêtement (30, 40) d'au moins une des feuille (3, 4) contient un additif qui favorise une fusion sans contact du revêtement thermoplastique.

12. Joint torique selon la revendication 11, où l'additif absorbe le rayonnement pour lequel l'enveloppe est, du reste, transparente.

13. Joint torique selon l'une quelconque des revendications 1 à 12, où la liaison étanche des zones de bordure (3a, 3b, 4a, 4b) est une liaison soudée, de préférence une liaison soudée au laser, plus préférablement une liaison soudée par rayonnement laser.

14. Joint torique selon l'une quelconque des revendications 1 à 13, où les feuilles (3, 4) sont formées en coques annulaires indéformables.

15. Joint torique selon la revendication 14, où la coupe transversale des coques est de forme polygonale.

16. Joint torique selon la revendication 15, où les transitions entre les surfaces polygonales des coques sont arrondies au moins sur le côté tourné vers le noyau élastomère (2) de la coque.

17. Procédé de fabrication d'un joint torique (1) comprenant les étapes :
- mise à disposition d'un anneau élastomère (2),
- mise à disposition de deux feuilles en fluoropolymère (3, 4),
- enveloppement de l'anneau élastomère (2) par les feuilles (3, 4) et
- la liaison de zones de bordure (3a, 3b) de l'une des feuilles (3) avec les zones de bordure (4a, 4b) de l'autre feuille (4), où les zones de bordure (3a, 3b, 4a, 4b) se chevauchent les unes les autres.

18. Procédé selon la revendication 17, où les zones de bordure (3a, 3b, 4a, 4b) des feuilles (3, 4) sont reliées les unes aux autres sans établissement de liaison entre l'enveloppe avec l'anneau élastomère (2).

19. Procédé selon la revendication 17 ou 18, où les feuilles (3, 4) sont mises à disposition sous forme de deux coques annulaires préformées en PTFE compacté et étiré, où une coque, au moins sur son côté intérieur, et l'autre coque, au moins sur son côté extérieur, sont revêtues de matériau thermoplastique (30, 40) et les zones de bordure (3a, 3b, 4a, 4b) des deux coques se chevauchent les unes les autres de sorte que leurs revêtements thermoplastiques (30, 40) sont en contact les uns avec les autres, où la liaison des zones de bordure (3a, 3b, 4a, 4b) a lieu par le procédé de soudage par rayonnement laser.
